# EUROPEAN PATENT SPECIFICATION

(11) **EP 1 976 315 B1**
(45) Date of publication and mention of the grant of the patent: **09.10.2013**
(21) Application number: 06833695.7
(22) Date of filing: 30.11.2006
(51) Int. Cl.: H04W 12/02, H04W 36/00

(54) **MOBILE COMMUNICATION SYSTEM, NEXT GENERATION CORE NETWORK, AND HANDOVER METHOD THEREFOR**
MOBILKOMMUNIKATIONSSYSTEM, KERNNETZ DER NÄCHSTEN GENERATION UND HANDOVER-VERFAHREN DAFÜR
SYSTÈME DE COMMUNICATION MOBILE, RÉSEAU CENTRAL DE LA PROCHAINE GÉNÉRATION ET PROCÉDÉ DE TRANSFERT CORRESPONDANT

(30) Priority: 12.01.2006 JP 2006004839
(43) Date of publication of application: 01.10.2008
(73) Proprietor: NEC Corporation, Minato-ku Tokyo 108-8001 (JP)
(72) Inventor: NAGATA, Jun, Tokyo 108-8001 (JP)
(74) Representative: Glawe, Delfs, Moll
(86) International application number: PCT/JP2006/323892
(87) International publication number: WO 2007/080717

(56) References cited:
- JP-A- 2002 518 955
- JP-A- 2003 533 926
- JP-A- 2005 348 433
- "3rd Generation Partnership Project; Technical Specification Group Services and System Aspects; 3GPP System Architecture Evolution: Report on Technical Options and Conclusions (Release 7)", 3GPP STANDARD; 3GPP TR 23.882, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.10.0, 1 January 2006 (2006-01-01), pages 1-96, XP050364102,
- SA3: "Security implications of RAN LTE control plane architectural alternatives", 3GPP DRAFT; R3-060073_S3-050874, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Sophia Antipolis, France; 20060106, 6 January 2006 (2006-01-06), XP050159035, [retrieved on 2006-01-06]
- ERICSSON: "On UTRA and E-UTRA mobility, Connected Mode", 3GPP DRAFT; R3-050944, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. London, UK; 20050824, 24 August 2005 (2005-08-24), XP050158374, [retrieved on 2005-08-24]
- TSG RAN WG3: "UMTS 25.832 Manifestations of Handover and SRNS Relocation v.2.1.1", 3GPP DRAFT; N2-99781, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CN WG2, no. Visby; 19990719, 5 January 2000 (2000-01-05), XP050403460, [retrieved on 2000-01-05]

## Description

### Technical Field

The present invention relates to a mobile communications system, next generation core network, and handover method therefor, and more particularly, to a mobile communications system, next generation core network, and handover method for a mobile terminal to move from a network in a next generation mobile communications system (B3G) to a current 3GPP network.

### Background Art

Recently, mobile communications networks (hereinafter referred to as 3G networks) standardized by 3GPP have spread rapidly.

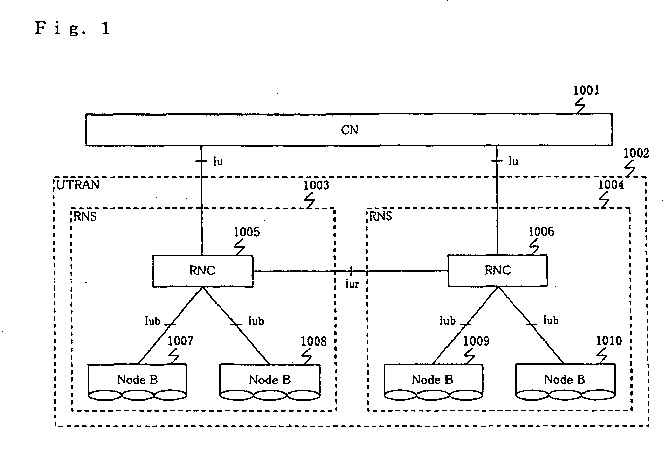

Figure 1 is a diagram showing a configuration of a conventional 3G network.

As shown in Figure 1, the conventional 3G network includes CN (Core Network) 1001 and UTRAN (UMTS Terrestrial Radio Access Network) 1002 which is connected with CN 1001 via an lu interface. UTRAN 1002 includes a plurality of RNS's (Radio Network Subsystems) 1003 and 1004. RNS 1003 includes RNC (Radio Network Controller) 1005 which is a wireless base station controller and a plurality of NodeBs 1007 and 1008 which are wireless base stations. Similarly, RNS 1004 includes RNC 1006 and a plurality of NodeBs 1009 and 1010. RNC 1005 and RNC 1006 are connected via an lur interface. RNC 1005 is connected with NodeBs 1007 and 1008 each via an lub interface. Similarly, RNC 1006 is connected with NodeBs 1009 and 1010 each via an lub interface. The number of RNS's 1003 and 1004, the number of RNCs 1005 and 1006 and the number of NodeBs 1007 to 1010 are not limited to the numbers shown in Figure 1.

Downlink data which is user data transmitted to UE (User Equipment) which is a mobile terminal goes through an encryption process in an RLC layer or MAC layer of RNC 1005 and RNC 1006 shown in Figure 1. The encryption function is implemented by enciphering control data and user data using an encryption key and encryption algorithm assigned to each user, to prevent control data and user data from being intercepted in a radio area.

A Lossless SRNS Relocation procedure for communications between 3G networks stipulates a forwarding function, where when UE moves from a cell controlled by an RNC to a cell controlled by another RNC, the forwarding function forwards downlink data whose delivery is not acknowledged by the UE out of downlink data possessed by the source RNC to the destination RNC. Since the forwarding function is implemented by PDCP protocol in a layer higher than the encryption function, the forwarded downlink data is not subjected to an encryption process. Thus, the destination RNC can treat the forwarded downlink data in the same way as downlink data received from the CN.

Furthermore, recently, in 3GPP, next generation mobile communications networks (hereinafter referred to as B3G networks) have been studied under projects named LTE (Long Term Evolution) and SAE (System Architecture Evolution) to improve user data throughput, alleviate call connection delays and user data transfer delays, reduce the number of nodes, reduce interfaces which need standardization, and so on.

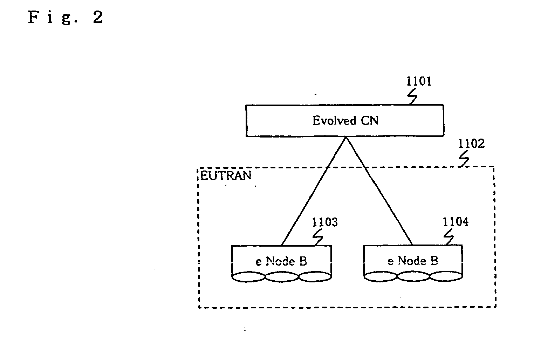

Figure 2 is a diagram showing a configuration of a B3G network currently under study.

As shown in Figure 2, the B3G network currently under study includes Evolved CN 1101 and EUTRAN 1102. EUTRAN 1102 in turn includes a plurality of eNodeBs 1103 and 1104 which are next generation wireless base stations. The number of eNodeBs 1103 and 1104 is not limited to the number shown in Figure 2.

In the B3G network shown in Figure 2, placement of RLC, MAC, and other protocol processes of RNC 1005 and RNC 1006 of the 3G network shown in Figure 1 in eNodeBs 1103 and 1104 is under consideration. In that case, it is thought undesirable to place a user data encryption function in eNodeBs 1103 and 1104 from the viewpoint of security and placement of the encryption function in Evolved CN 1101 is being considered.

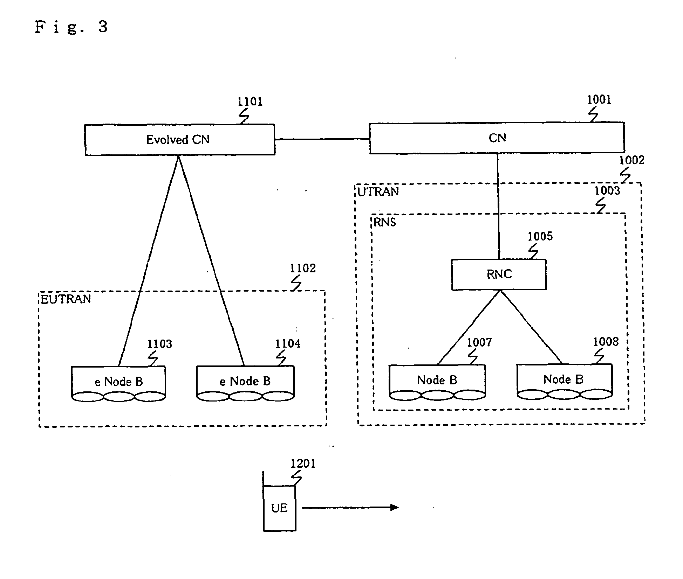

Figure 3 is a diagram showing a configuration in which the 3G network shown in Figure 1 and the B3G network shown in Figure 2 are interconnected (see, for example, 3GPP TR 23.882 V0.10.0 (2006-01)).

As shown in Figure 3, through the connection between CN 1001 and Evolved CN 1101, the 3G network shown in Figure 1 and the B3G network shown in Figure 2 are interconnected. UE 1201 moves from the B3G network to the 3G network. Also, the encryption function of the 3G network is placed in RNC 1005 and the encryption function of the B3G network is placed in Evolved CN 1101.

In the B3G network, the nodes whose functions correspond to those of RNC 1005 in the 3G network are eNodeBs 1103 and 1104. Thus, when UE 1201 is moving from the B3G network to the 3G network as shown in Figure 3, it is conceivable that downlink data from source eNodeB 1103 or 1104 can be forwarded to destination RNC 1005.

Regarding handover between different networks, handover timing may be controlled using a higher-level apparatus to switch a specified station which processes data transmitted from a wireless base station (see, for example, Japanese Patent Laid-Open No. 2005-260435).

However, the method described above has the following problems.

In the B3G network, since the encryption function for downlink data is placed in Evolved CN, downlink data possessed by eNodeB has been encrypted. Thus, when the downlink data is forwarded from eNodeB to a destination RNC in the 3G network, the downlink data already encrypted by Evolved CN is received by the destination RNC. The standardized current RNC does not assume that encrypted data will be forwarded. This poses a problem in that the forwarded downlink data will be encrypted again as well as a problem in that the UE, moving to the 3G network, has to distinguish between the downlink data forwarded to the RNC within the network and the downlink data transmitted directly from the CN to the RNC and has to decrypt the forwarded downlink data in a manner peculiar to the B3G network. Also, depending on an encryption algorithm, there is a problem in that communications with Evolved CN need to be conducted for the purpose of decryption even after the UE has moved to the 3G network.

The method disclosed in Japanese Patent Laid-Open No. 2005-260435 does not take into consideration the forwarding of downlink data enciphered by an encryption function.

### Disclosure of the Invention

The present invention has been made to solve the above problems and has an object to provide a mobile communications system, next generation core network, and handover method which can readily forward encrypted downlink data when a mobile terminal moves from a B3G network to a 3G network.

To achieve the above object, the present invention provides a mobile communications system comprising: a mobile terminal; a core network connected to a wireless base station controller which is adapted to control a wireless base station; and a next generation core network which, being connected to a next generation wireless base station, comprises means for transmitting data forwarded from the next generation wireless base station to the core network and encryption means for encrypting downlink data to be transmitted to the mobile terminal via the next generation wireless base station, wherein the encryption means is adapted to decrypt the downlink data forwarded from the next generation wireless base station.

In the mobile communications system, the next generation wireless base station comprises means for forwarding data whose delivery is not acknowledged by the mobile terminal.

The present invention also provides a next generation core network which, being connected to a core network and a next generation wireless base station, comprises encryption means for encrypting downlink data to be transmitted to the next generation wireless base station and means for transmitting data forwarded from the next generation wireless base station to the core network, where the core network is connected to a wireless base station controller which is adapted to control a wireless base station, wherein the encryption means is adapted to decrypt the downlink data forwarded from the next generation wireless base station.

The present invention also provides a handover method for a mobile communications system that comprises a mobile terminal, a core network connected to a wireless base station controller which controls a wireless base station, and a next generation core network which, being connected to a next generation wireless base station, transmits data forwarded from the next generation wireless base station to the core network and encrypts downlink data to be transmitted to the mobile terminal via the next generation wireless base station, wherein the next generation core network performs the steps of: decrypting the downlink data forwarded from the next generation wireless base station, and transmitting the decrypted data to the core network.

In the handover method, the next generation wireless base station performs forwarding data whose delivery is not acknowledged by the mobile terminal to the core network.

According to the present invention configured as described above, the encryption means which encrypts the data transmitted to the mobile terminal via the next generation wireless base station of the next generation core network decrypts the data forwarded from the next generation wireless base station and the decrypted forwarding data is transmitted from the next generation core network to the core network.

This eliminates the need to change procedures for processing the forwarded data on the existing core network and on apparatus controlled by the core network.

According to the present invention, since the encryption means which encrypts the data transmitted to the mobile terminal via the next generation wireless base station of the next generation core network decrypts the data forwarded from the next generation wireless base station and since the decrypted forwarding data is transmitted from the next generation core network to the core network as described above, the encrypted downlink data can be forwarded easily.

### Brief Description of the Drawings

Figure 1 is a diagram showing a configuration of a conventional 3G network;
Figure 2 is a diagram showing a configuration of a B3G network currently under study;
Figure 3 is a diagram showing a configuration in which the 3G network shown in Figure 1 and the B3G network shown in Figure 2 are interconnected;
Figure 4 is a diagram showing an exemplary embodiment of a mobile communications system according to the present invention;
Figure 5 is a sequence diagram illustrating a handover method for the mobile communications system shown in Figure 4; and
Figure 6 is a sequence diagram illustrating another handover method for the mobile communications system shown in Figure 4.

### Best Mode for Carrying Out the Invention

An exemplary embodiment will be described below with reference to the drawings.

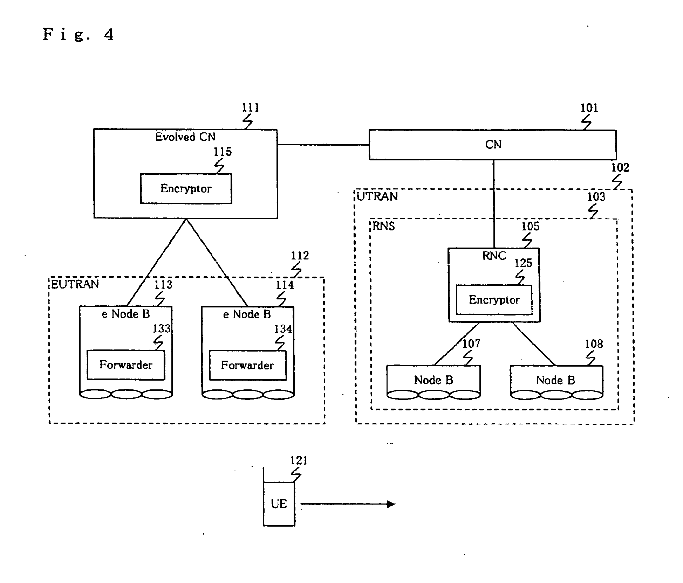

Figure 4 is a diagram showing an exemplary embodiment of a mobile communications system according to the present invention.

According to the exemplary embodiment, Evolved CN 111 and EUTRAN 112 are installed on a B3G network as shown in Figure 4, where Evolved CN 111 is a next generation core network. Also, CN 101 and UTRAN 102 are installed on a 3G network, where CN 101 is a core network. Also, Evolved CN 111 and CN 101 are interconnected. UE 121, which is a mobile terminal, is moving from the B3G network to the 3G network.

Furthermore, Evolved CN 111 includes encryptor 115. Also, EUTRAN 112 includes a plurality of eNodeBs 113 and 114 which are next generation wireless base stations. Furthermore, eNodeBs 113 and 114 include forward units 133 and 134, respectively. Also, UTRAN 102 includes RNS 103. RNS 103 in turn includes RNC 105 which is a wireless base station controller and a plurality of NodeBs 107 and 108 which are wireless base stations. RNC 105 in turn includes encryptor 125.

Encryptor 115 encrypts the downlink data transmitted to UE 121 via EUTRAN 112 and decrypts the downlink data forwarded from forward units 133 and 134. On the other hand, eNodeBs 113 and 114 integrate functions of RNC 105 and NodeBs 107 and 108 of the 3G network. From among downlink data possessed by eNodeBs 113 and 114, forward units 133 and 134 forward the downlink data for which no ACK is returned from UE 121, i.e., the delivery is not acknowledged, to the 3G network during handover.

Encryptor 125 encrypts the downlink data transmitted to UE 121 via NodeBs 107 and 108.

The downlink data encrypted by encryptors 115 and 125 is decrypted in UE 121.

The number of eNodeBs 113 and 114 and the number of NodeBs 107 and 108 are not limited to the numbers shown in Figure 4.

The handover method for the mobile communications system shown in Figure 4 will be described below. It is assumed that UE 121 shown in Figure 4 is moving from a coverage of eNodeB 114 to a coverage of NodeB 107. It is also assumed that a soft handover process is not performed between the 3G network and the B3G network.

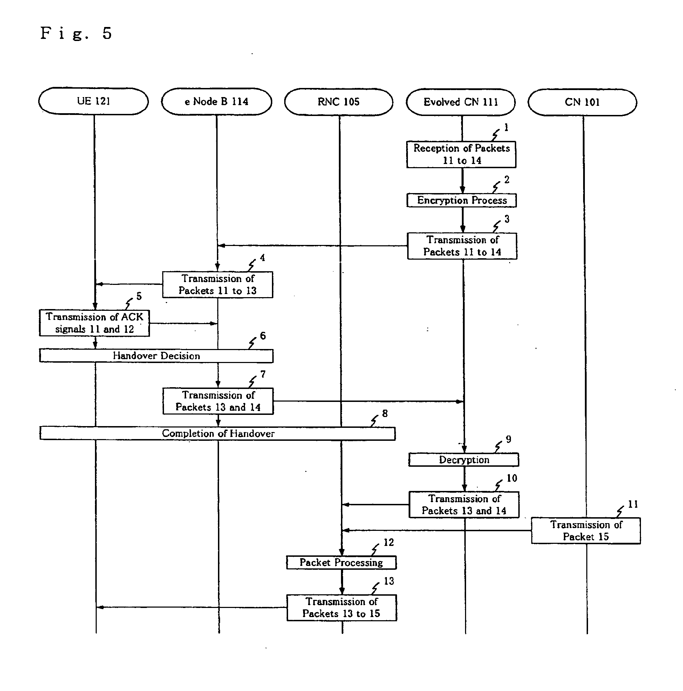

Figure 5 is a sequence diagram illustrating a handover method for the mobile communications system shown in Figure 4.

Packets 11 to 14 which are downlink data transmitted from a higher-level apparatus (not shown) and addressed to UE 121 are received by Evolved CN 111 in Step 1 and received packets 11 to 14 are subjected to a predetermined encryption process in Step 2. Sequence numbers have been assigned sequentially to packets 11 to 14 to indicate the order of data.

When the encryption process is completed, encrypted packets 11 to 14 are transmitted from Evolved CN 111 to eNodeB 114 in Step 3.

Packets 11 to 14 are received by eNodeB 114 and buffered in eNodeB 114. The buffering is intended to provide for retransmission and is the same as conventional buffering which is cleared when delivery of downlink data is acknowledged between UE 121 and eNodeB 114.

Packets 11 to 13 are transmitted to UE 121 in Step 4 from among packets 11 to 14 buffered in eNodeB 114. Buffered packets 11 to 14 are transmitted to UE 121 normally, but it is assumed here for convenience in describing the operation that packets 11 to 13 are transmitted and that packet 14 remains to be transmitted.

In Step 5, UE 121 transmits an ACK signal to eNodeB 114 to acknowledge delivery of packets received successfully by UE 121 from among packets 11 to 13 transmitted from eNodeB 114. The ACK signal makes it possible to recognize the sequence numbers of the packets whose delivery has been acknowledged. This is the same as ACK processing in the conventional 3G network. The sequence numbers are determined by a method specified by the 3GPP recommendations. It is assumed here that the delivery of packets 11 and 12 has been acknowledged from among packets 11 to 13 transmitted from eNodeB 114 and that packet 13 has not been received successfully by UE 121 for some reason.

The handover state of UE 121, moving from the B3G network to the 3G network, is recognized by UE 121 and eNodeB 114. Then, in Step 6, transfer (handover) to the 3G network is decided upon and handover procedures are carried out.

Then, based on the ACK signal transmitted from UE 121 and received by eNodeB 114, a packet which, although buffered in eNodeB 114, has not been delivered to UE 121 is recognized by forward unit 134. The packet recognized by forward unit 134 as having not been delivered to UE 121 is transmitted from forward unit 134 to Evolved CN 111 in Step 7. Since the ACK signal indicates that packets 11 and 12 have been received by UE 121, packets 13 and 14 are transmitted from forward unit 134 to Evolved CN 111. Subsequently, in Step 8, the handover procedures are completed and communications between UE 121 and the destination 3G network are established. The handover procedures are the same as conventional ones, and thus detailed description thereof will be omitted.

Packets 13 and 14 transmitted from forward unit 134 to Evolved CN 111 are decrypted by encryptor 115 of Evolved CN 111 in Step 9. In particular, if a cryptographic algorithm is based on a secret key scheme, an enciphered key can be used as it is for the decryption process.

The decrypted packets 13 and 14 are transmitted from Evolved CN 111 to RNC 105 via CN 101 in Step 10. In so doing, information indicating that the sender is Evolved CN 111 is attached to transmitted packets 13 and 14.

On the other hand, packet 15 is transmitted from CN 101 to RNC 105 in Step 11.

RNC 105 receives packets 13 and 14 transmitted from Evolved CN 111 in Step 10 and packet 15 transmitted from CN 101 in Step 11. Received packets 13 to 15 are subjected to conventional packet processing by RNC 105 in Step 12. The packet processing includes buffering by eNodeB 114 and encryption processing by encryptor 125.

Subsequently, packets 13 to 15 are transmitted from RNC 105 to UE 121 in Step 13.

Also, it is conceivable that the method described below can be used.

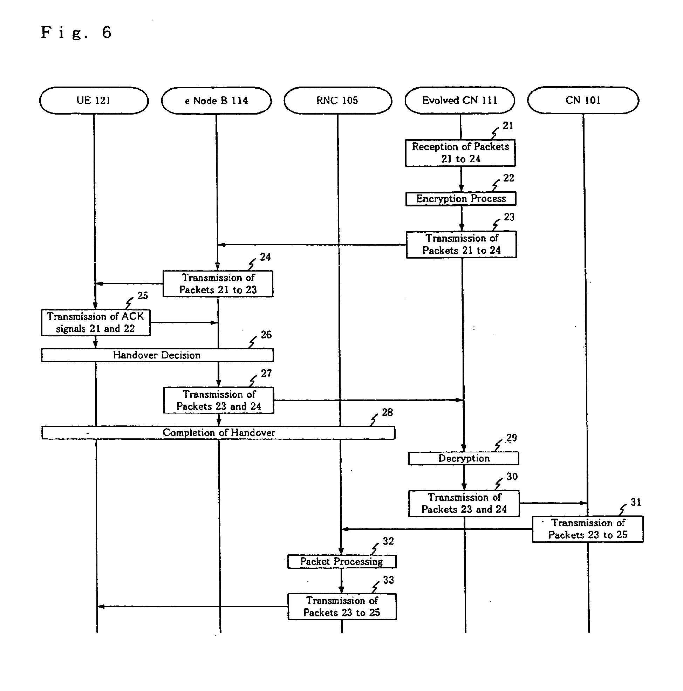

Figure 6 is a sequence diagram illustrating another handover method for the mobile communications system shown in Figure 4.

Packets 21 to 24 which are downlink data transmitted from a higher-level apparatus (not shown) and addressed to UE 121 are received by Evolved CN 111 in Step 21 and received packets 21 to 24 are subjected to a predetermined encryption process in Step 22. Sequence numbers have been assigned sequentially to packets 21 to 24 to indicate the order of data.

When the encryption process is completed, encrypted packets 21 to 24 are transmitted from Evolved CN 111 to eNodeB 114 in Step 23.

Packets 21 to 24 are received by eNodeB 114 and buffered in eNodeB 114. The buffering is the same as the one described above.

From among packets 21 to 24 buffered in eNodeB 114, packets 21 to 23 are transmitted to UE 121 in Step 24. Buffered packets 21 to 24 are transmitted to UE 121 normally, but it is assumed here for convenience in describing this operation that packets 21 to 23 are transmitted to UE 121 and packet 24 remains to be transmitted.

In Step 25, UE 121 transmits an ACK signal to eNodeB 114 to acknowledge delivery of packets received successfully by UE 121 from among packets 21 to 23 transmitted from eNodeB 114. The ACK signal is the same as those described above. It is assumed here that the delivery of packets 21 and 22 from among packets 21 to 23 transmitted from eNodeB 114 has been acknowledged and that packet 23 has not been received successfully by UE 121 for some reason.

Handover state of UE 121 moving from the B3G network to the 3G network is recognized by UE 121 and eNodeB 114. Then, in Step 26, transfer (handover) to the 3G network is decided upon and handover procedures are carried out.

Then, based on the ACK signal transmitted from UE 121 and received by eNodeB 114, a packet which, although buffered in eNodeB 114, has not been delivered to UE 121 is recognized by forward unit 134 of eNodeB 114. The packet recognized by forward unit 134 as having not been delivered to UE 121 is transmitted from forwarder 134 to Evolved CN 111 in Step 27. Since the ACK signal indicates that packets 21 and 22 have been received by UE 121, packets 23 and 24 are transmitted from forward unit 134 to Evolved CN 111. Subsequently, in Step 28, the handover procedures are completed and communications between UE 121 and the destination 3G network are established. The handover procedures are the same as conventional ones, and thus detailed description thereof will be omitted.

Packets 23 and 24 transmitted from forwarder 134 to Evolved CN 111 are decrypted by encryptor 115 of Evolved CN 111 in Step 29. In particular, if a cryptographic algorithm is based on a secret key scheme, an enciphered key can be used as is for the decryption process.

Decrypted packets 23 and 24 are transmitted from Evolved CN 111 to CN 101 in Step 30. The premise is that CN 101 is ready to receive the packet addressed to UE 121 from Evolved CN 111.

Packets 23 and 24 which have been received by CN 101 and packet 25 which has not been forwarded are transmitted from CN 101 to RNC 105 in Step 31.

RNC 105 receives packets 23 to 25 transmitted from CN 101. Conventional packet processing is performed in Step 32. The packet processing includes buffering by eNodeB 114 and encryption processing by encryptor 125.

Subsequently, packets 23 to 25 are transmitted from RNC 105 to UE 121 in Step 33.

Consequently, UE 121 handed over from the B3G network to the 3G network can operate on the 3G network without any change to standardized procedures even if an encryption process has been performed by Evolved CN 111 in the B3G network.

## Claims

1. A mobile communications system comprising: a mobile terminal (121); a core network (101) connected to a wireless base station controller (105) which is adapted to control a wireless base station (107, 108); and a next generation core network (111) which, being connected to a next generation wireless base station (113, 114), comprises means for transmitting data forwarded from the next generation wireless base station (113, 114) to the core network (101) and encryption means (115) for encrypting downlink data to be transmitted to the mobile terminal (121) via the next generation wireless base station (113, 114), **characterized in that**
the encryption means (115) is adapted to decrypt the downlink data forwarded from the next generation wireless base station (113, 114).

2. The mobile communications system according to claim 1, **characterized in that** the next generation wireless base station (113, 114) comprises means for forwarding data (133, 134) whose delivery is not acknowledged by the mobile terminal (121).

3. A next generation core network (111) which, being connected to a core network (101) and a next generation wireless base station (113, 114), comprises encryption means (115) for encrypting downlink data to be transmitted to the next generation wireless base station (113, 114) and means for transmitting data forwarded from the next generation wireless base station (113, 114) to the core network (101), where the core network (101) is connected to a wireless base station controller (105) which is adapted to control a wireless base station (107, 108), **characterized in that**
the encryption means (115) is adapted to decrypt the downlink data forwarded from the next generation wireless base station (113, 114).

4. A handover method for a mobile communications system that comprises a mobile terminal (121), a core network (101) connected to a wireless base station controller (105) which controls a wireless base station (107, 108), and a next generation core network (111) which, being connected to a next generation wireless base station (113, 114), transmits data forwarded from the next generation wireless base station (113, 114) to the core network (101) and encrypts downlink data to be transmitted to the mobile terminal (121) via the next generation wireless base station (113, 114), **characterized in that** the next generation core network (111) performs the steps of:
decrypting the downlink data forwarded from the next generation wireless base station (113, 114), and
transmitting the decrypted data to the core network (101).

5. The handover method according to claim 4, **characterized in that** the next generation wireless base station (113, 114) performs forwarding data whose delivery is not acknowledged by the mobile terminal to the core network (101).

## Patentansprüche

1. Mobilkommunikationssystem, das Folgendes umfasst: ein mobiles Endgerät (121); ein Kernnetzwerk (101), das mit einer Steuerung (105) für eine drahtlose Basisstation verbunden ist, die geeignet ist, eine drahtlose Basisstation (107, 108) zu steuern; und ein Kernnetzwerk der nächsten Generation (111), das, wenn es mit einer drahtlosen Basisstation der nächsten Generation (113, 114) verbunden ist, Mittel zum Übertragen von Daten, die von der drahtlosen Basisstation der nächsten Generation (113, 114) zum Kernnetzwerk (101) weitergeleitet werden, und Verschlüsselungsmittel (115) zum Verschlüsseln von Downlink-Daten, die über die drahtlose Basisstation der nächsten Generation (113, 114) an das mobile Endgerät (121) zu übertragen sind, umfasst, **dadurch gekennzeichnet, dass**
das Verschlüsselungsmittel (115) geeignet ist, die Downlink-Daten zu entschlüsseln, die von der drahtlosen Basisstation der nächsten Generation (113, 114) weitergeleitet werden.

2. Mobilkommunikationssystem gemäß Anspruch 1, **dadurch gekennzeichnet, dass** die drahtlose Basisstation der nächsten Generation (113, 114) Mittel zum Weiterleiten von Daten (133, 134) umfasst, deren Zustellung nicht durch das mobile Endgerät (121) bestätigt wird.

3. Kernnetzwerk der nächsten Generation (111), das, wenn es mit einem Kernnetzwerk (101) und einer drahtlosen Basisstation der nächsten Generation (113, 114) verbunden ist, Verschlüsselungsmittel (115) zum Verschlüsseln von Downlink-Daten, die an die drahtlose Basisstation der nächsten Generation (113, 114) zu übertragen sind, und Mittel zum Übertragen von Daten, die von der drahtlosen Basisstation der nächsten Generation (113, 114) zum Kernnetzwerk (101) weitergeleitet werden, umfasst, wobei das Kernnetzwerk (101) mit einer Steuerung (105) für eine drahtlose Basisstation verbunden ist, die geeignet ist, eine drahtlose Basisstation (107, 108) zu steuern, **dadurch gekennzeichnet, dass**
das Verschlüsselungsmittel (115) geeignet ist, die Downlink-Daten zu entschlüsseln, die von der drahtlosen Basisstation der nächsten Generation (113, 114) weitergeleitet werden.

4. Übergabeverfahren für ein Mobilkommunikationssystem, das ein mobiles Endgerät (121), ein Kernnetzwerk (101), das mit einer Steuerung (105) für eine drahtlose Basisstation verbunden ist, die eine drahtlose Basisstation (107, 108) steuert, und ein Kernnetzwerk der nächsten Generation (111) umfasst, das, wenn es mit einer drahtlosen Basisstation der nächsten Generation (113, 114) verbunden ist, Daten, die von der drahtlosen Basisstation der nächsten Generation (113, 114) zum Kernnetzwerk (101) weitergeleitet werden, überträgt und Downlink-Daten, die über die drahtlose Basisstation der nächsten Generation (113, 114) an das mobile Endgerät (121) zu übertragen sind, verschlüsselt, **dadurch gekennzeichnet, dass** das Kernnetzwerk der nächsten Generation (111) folgende Schritte ausführt:
Entschlüsseln der Downlink-Daten, die von der drahtlosen Basisstation der nächsten Generation (113, 114) weitergeleitet werden, und
Übertragen der entschlüsselten Daten an das Kernnetzwerk (101).

5. Übergabeverfahren gemäß Anspruch 4, **dadurch gekennzeichnet, dass** die drahtlose Basisstation der nächsten Generation (113, 114) das Weiterleiten von Daten ausführt, deren Zustellung dem Kernnetzwerk (101) nicht durch das mobile Endgerät bestätigt wird.

## Revendications

1. Système de communication mobile comprenant : un terminal mobile (121) ; un réseau fédérateur (101) connecté à un contrôleur de station de base sans fil (105) qui est apte à commander une station de base sans fil (107, 108) ; et un réseau fédérateur nouvelle génération (111), connecté à une station de base sans fil nouvelle génération (113, 114), lequel comprend un moyen pour transmettre des données acheminées à partir de la station de base sans fil nouvelle génération (113, 114) au réseau fédérateur (101), et un moyen de chiffrement (115) pour chiffrer des données de liaison descendante à transmettre au terminal mobile (121) par l'intermédiaire de la station de base sans fil nouvelle génération (113, 114), **caractérisé en ce que** :
le moyen de chiffrement (115) est apte à déchiffrer les données de liaison descendante acheminées à partir de la station de base sans fil nouvelle génération (113, 114).

2. Système de communication mobile selon la revendication 1, **caractérisé en ce que** la station de base sans fil nouvelle génération (113, 114) comprend un moyen pour acheminer des données (133, 134) dont la réception n'est pas reconnue par le terminal mobile (121).

3. Réseau fédérateur nouvelle génération (111), connecté à un réseau fédérateur (101) et à une station de base sans fil nouvelle génération (113, 114), lequel comporte un moyen de chiffrement (115) pour chiffrer des données de liaison descendante à transmettre à la station de base sans fil nouvelle génération (113, 114), et un moyen pour transmettre des données acheminées à partir de la station de base sans fil nouvelle génération (113, 114) au réseau fédérateur (101), où le réseau fédérateur (101) est connecté à un contrôleur de station de base sans fil (105) qui est apte à commander une station de base sans fil (107, 108), **caractérisé en ce que**
le moyen de chiffrement (115) est apte à déchiffrer les données de liaison descendante acheminées à partir de la station de base sans fil nouvelle génération (113, 114).

4. Procédé de transfert intercellulaire pour un système de communication mobile qui comporte un terminal mobile (121), un réseau fédérateur (101) connecté à un contrôleur de station de base sans fil (105) qui commande une station de base sans fil (107, 108), et un réseau fédérateur nouvelle génération (111), connecté à une station de base sans fil nouvelle génération (113 , 114), lequel transmet des données acheminées à partir de la station de base sans fil nouvelle génération (113, 114) au réseau fédérateur (101), et chiffre des données de liaison descendante à transmettre au terminal mobile (121) par l'intermédiaire de la station de base sans fil nouvelle génération (113, 114), **caractérisé en ce que** le réseau fédérateur nouvelle génération (111) met en oeuvre les étapes ci-dessous consistant à :
déchiffrer les données de liaison descendante acheminées à partir de la station de base sans fil nouvelle génération (113, 114) ; et
transmettre les données déchiffrées au réseau fédérateur (101).

5. Procédé de transfert intercellulaire selon la revendication 4, **caractérisé en ce que** la station de base sans fil nouvelle génération (113, 114) met en oeuvre l'acheminement des données dont la réception n'est pas reconnue par le terminal mobile au réseau fédérateur (101).
